# EUROPÄISCHE PATENTSCHRIFT

(11) **EP 1 040 608 B1**
(45) Veröffentlichungstag und Bekanntmachung des Hinweises auf die Patenterteilung: **21.07.2004**
(21) Anmeldenummer: 98948811.9
(22) Anmeldetag: 19.08.1998
(51) Int. Cl.: H04H 1/00

(54) **VERFAHREN ZUR ÜBERTRAGUNG VON INFORMATIONEN BZW. ENDGERÄT ZUM EMPFANG VON DATEN**
METHOD FOR TRANSMITTING INFORMATION AND A TERMINAL FOR RECEIVING DATA
PROCEDE POUR LA TRANSMISSION D'INFORMATIONS ET TERMINAL POUR LA RECEPTION DE DONNEES

(30) Priorität: 14.11.1997 DE 19750361
(43) Veröffentlichungstag der Anmeldung: 04.10.2000
(73) Patentinhaber: ROBERT BOSCH GMBH, 70442 Stuttgart (DE)
(72) Erfinder: KYNAST, Andreas, D-31139 Hildesheim (DE); KERSKEN, Ulrich, D-31199 Diekholzen (DE)
(86) Internationale Anmeldenummer: PCT/DE1998/002407
(87) Internationale Veröffentlichungsnummer: WO 1999/026366

(56) Entgegenhaltungen:
- DE-A- 19 624 019
- DE-U- 29 714 588
- US-A- 5 239 662

## Beschreibung

### Stand der Technik

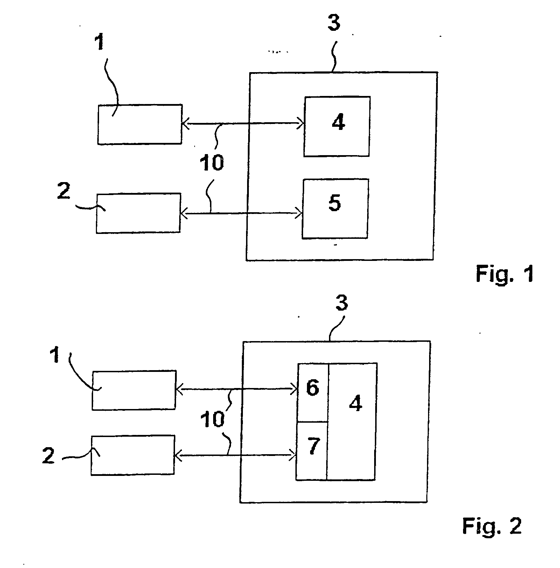

Die Erfindung geht aus von einem Verfahren zur Übertragung von Informationen bzw. von einem Endgerät zum Empfang von Daten nach der Gattung der unabhängigen Patentansprüche. Es sind bereits Verfahren zur Übertragung von Informationen bzw. Endgeräte bekannt, bei denen die Datenanbieter jeweils Datendienste 4, 5 vorsehen, die an die Möglichkeiten zur Datenverarbeitung der Endgeräte 1, 2 angepaßt sind (siehe Figur 1). Derartige Systeme sind jedoch sehr unflexibel.

Die DE 29714588 U zeigt die Kommunikation zwischen mehreren Laptop-Computern mit mehreren DECT-Basisstationen, welche mit verschiedenen Endgeräten wie z.B. Druckern und ISDN-Anschlüssen verbunden sind. Eine PCMCIA-Karte im Laptop übernimmt hierbei die Anpassung der Anwendungsdaten in die für die verschiedenen Endgeräte geeigneten Formate oder Protokolle. Die DE 297 14 588 U beschreibt somit pro Anwendung einen einzigen Endgerätetyp mit einem bestimmten benötigten Datenformat.

Die DE 196 24 019 A betrifft die Auswahl eines unter verschiedenen Kommunikationsverfahren (wie z.B. Mobitex, GSM, SMS oder Bündelfunk) zwischen mehreren Arbeitsmaschinen.

### Vorteile der Erfindung

Das erfindungsgemäße Verfahren zur Übertragung von Informationen bzw. das erfindungsgemäße Endgerät zum Empfang von Daten haben demgegenüber den Vorteil, daß die Datendienste nicht mehr individuell an die Möglichkeiten der Endgeräte angepaßt sein müssen. Vielmehr ist es so, daß die Daten in einem standardisierten Format erstellt werden können und dann entsprechend durch Schnittstellen an die Möglichkeiten der Endgeräte zur Datenverarbeitung angepaßt werden. Es können daher Endgeräte mit unterschiedlichen Möglichkeiten den gleichen Datendienst nutzen. Weiterhin wird der Aufbau der Endgeräte vereinfacht, da wesentliche Funktionen jetzt nur einmal in den Datenanbietern vorhanden sein müssen. Da die Schnittstellen nur bei den Datenanbietern vorhanden sind, können Fehler sehr einfach zentral behoben werden und die Anpassung an neue Endgeräte muß nur einmal erfolgen.

Durch die in den abhängigen Patentansprüchen aufgeführten Maßnahmen sind vorteilhafte Verbesserungen der Gegenstände der unabhängigen Patentansprüche möglich. Für den Austausch von Daten wird zweckmäßigerweise ein Funknetz, insbesondere ein digitales Mobiltelefonnetz verwandt. Dabei können dann auch Daten sowohl vom Endgerät zum Diensteanbieter wie auch umgekehrt übermittelt werden.

### Zeichnungen

Ausführungsbeispiele der Erfindung sind in den Zeichnungen dargestellt und in der nachfolgenden Beschreibung näher erläutert. Es zeigen Figur 1 ein herkömmliches Verfahren des Datenaustauschs zwischen Endgeräten und Datenanbietern und Figur 2 das erfindungsgemäße Verfahren zum Austausch von Daten zwischen einem Datenanbieter und Endgeräten.

### Beschreibung

In der Figur 1 wird ein bereits bekanntes System zur Übertragung von Informationen dargestellt. Dieses System weist Datenabnehmer 1, 2 auf, die beispielsweise als Endgeräte in einem Kraftfahrzeug z.B. Autoradios mit Zusatzfunktionen ausgebildet sind. Den Datenabnehmern 1, 2 bzw. den Endgeräten 1, 2 steht ein Datenanbieter 3 bzw. eine Infrastruktur 3 gegenüber. Diese Datenanbieter 3 bzw. die Infrastruktur 3 erzeugt Daten, die durch ein Übertragungsmedium 10 an die Datenabnehmer übertragen werden. Das Übertragungsmedium wird hier durch die Pfeile 10 dargestellt. Bezüglich des Datenübertragungsmediums 10 wird hier insbesondere an digitale Funktelefonsysteme wie beispielsweise das GSM-Mobilfunksystem gedacht. Beim GSM-Mobilfunksystem können Daten im Rahmen des Short-Message-Service übertragen werden. Weiterhin ist es auch möglich Daten über die normalen Sprachkanäle des GSM-Mobilfunktelefons zu übertragen, beispielsweise in der Form von Faxdaten. Dabei können, wie durch die Pfeile 10 angedeutet wird, nicht nur Daten von den Datenanbietern zu den Endgeräten 1, 2 übertragen werden, sondern die Endgeräte 1, 2 können auch Daten zu den Datenanbietern 3 übertragen. Dies dient insbesondere dazu, um ausgehend von den Endgeräten 1, 2 entsprechende Daten von den Datenanbietern 3 anzufordern.

Die Datenanbieter 3 weisen in der Figur 1 zwei unterschiedliche Datendienste 4'und 5 auf, die jeweils an die Endgeräte 1 und 2 angepaßt sind. Diese unterschiedlichen Datendienste 4, 5 können zwar im wesentlichen die gleiche Funktionalität aufweisen, sie sind jedoch an die jeweiligen Möglichkeiten der Endgeräte 1 und 2 angepaßt. Die Datendienste 4 und 5 können beispielsweise darin bestehen, daß dem Benutzer eine Reiseroute unter Berücksichtigung der jeweils aktuellen Verkehrslage zusammengestellt wird. Die Benutzer würden entsprechend ihren Startpunkt und Zielpunkt in den Endgeräten 1 und 2 eingeben und dann durch das Übertragungsmedium 10 diese Daten mit einer entsprechenden Anforderung eine Reiseroute zusammenzustellen, an den Datenanbieter 3 übermitteln. Die Datendienste 4 und 5 erstellen dann jeweils die optimale Reiseroute und übermitteln diese über das Übertragungsmedium 10 zurück an die Endgeräte 1, 2. Die Endgeräte 1, 2 unterscheiden sich dabei, jedoch wesentlich in der Art, wie diese Informationen dargestellt werden können. Das Endgerät 1 hat beispielsweise ein kleines Display und eine Sprachausgabe. Die optimale Route würde dann dadurch dargestellt, daß kurze Ortseingaben auf dem Bildschirm erscheinen und entsprechende Sprachsignale bei Bedarf ausgegeben werden. Das Endgerät 2 weist beispielsweise einen großen Farbbildschirm auf. Bei diesem Endgerät würde dann die Information über die optimale Reiseroute durch eine entsprechend farbig markierte Landkarte auf dem Bildschirm dargestellt. Aufgrund der unterschiedlichen Möglichkeiten der Endgeräte müssen bei den Datenanbietern auch unterschiedliche Datendienste 4, 5 vorgesehen werden, die jeweils an die Möglichkeiten der Datenverarbeitung der Endgeräte 1, 2 angepaßt sind.

In der Figur 2 wird ein erfindungsgemäßes Verfahren zur Übertragung von Informationen zwischen einem Datenanbieter 3 und Datenabnehmern 1, 2 dargestellt. Die Endgeräte 1, 2 des Übertragungsmedium 10 und die Datenanbieter 3 entsprechend den entsprechenden Elementen aus der Figur 1. Insbesondere unterscheiden sich diese Endgeräte hinsichtlich ihrer Möglichkeiten Daten zu verarbeiten, insbesondere in der Darstellung auf einem Bildschirm oder Ausgabe in der Form von Sprache.

Der innere Aufbau des Datenanbieters 3 unterscheidet sich von der Figur 1. Der Datenanbieter 3 weist nur einen Datendienst 4 auf, der unabhängig von den Möglichkeiten zur Datenverarbeitung der Endgeräte 1, 2 ausgebildet ist. Bevor die Daten über das Übertragungsmedium 10 an die jeweiligen Endgeräte 1, 2 übertragen werden, werden sie durch Schnittstellen 6, 7 noch entsprechend an die Endgeräte 1, 2 angepaßt. Es ist die Aufgabe dieser Schnittstellen 6, 7, die vom Datendienst 4 angebotenen Daten an die Möglichkeiten der Endgeräte 1, 2 anzupassen bzw. die Informationen, die von den Endgeräten 1, 2 an den Datenanbieter 3 übersandt werden entsprechend an den Datendienst 4 anzupassen. Unter Schnittstellen werden hier Schnittstellenumsetzter verstanden die z. B. als Software ausgebildet sind und eine Anpassung der Daten von Endgerät an den Datendienst oder umgekehrt durchführen. Beispielsweise kann das Endgerät 1 eine Spracheingabe aufweisen. Diese Sprachdaten werden dann an die Schnittstelle 6 übertragen und dort zu entsprechenden Informationen für den Datendienst 4 aufbereitet. Diese Information kann für das oben bereits ausgeführte Beispiel in dem Startpunkt und dem Endpunkt der geplanten Reise bestehen. Der Datendienst 4 bestimmt anhand dieser Daten eine optimale Reiseroute und gibt eine Vielzahl von Informationen bezüglich der optimalen Reiseroute an die Schnittstelle 6. Wenn der Datendienst 4 beispielsweise eine Landkarte zur Verfügung stellt, so wird diese Information durch die Schnittstelle 6 in entsprechende Daten für eine kurze schriftliche Darstellung beziehungsweise die Sprachausgabe in dem Endgerät 1 umwandeln, da dies die Möglichkeiten der Weiterverarbeitung von Daten des Endgeräts 1 entspricht. Von der Schnittstelle 6 werden daher über das Kommunikationsmedium 10 nur Daten in einem Format übertragen, die von dem Endgerät 1 verarbeitet werden können. Das Endgerät 2 weist einen größeren Farbbildschirm auf, mit dessen Hilfe der Benutzer des Endgerätes 2 einen Startpunkt und Zielpunkt für seine Reise eingeben kann (z.B. einen Touch-Screen). Diese Daten werden über das Kommunikationsmedium 10 zur Schnittstelle 7 übertragen, die dann entsprechende Eingabedaten für den Datendienst 4 generiert. Der Datendienst 4 stellt entsprechend die Reiseroute zusammen, hier beispielsweise wieder in der Form einer großen Landkarte, die in dem Format und Größe nicht auf dem Bildschirm des Endgeräts 2 darstellbar ist. Die Schnittstelle 7 wird diese Daten dann entsprechend aufbereiten, indem beispielsweise die nicht benötigten Kartendaten, beispielsweise weil der Kartenausschnitt der von dem Datendienst 4 zur Verfügung gestellt wird, zu groß ist, entsprechend auf das in dem Endgerät 2 darstellbare Format aufbereiten. Nur diese Daten werden dann über die Schnittstelle 10 an das Endgerät 2 übertragen, d.h. das Endgerät 2 erhält auch hier wiederum nur die Daten die es vernünftigerweise weiterverarbeiten kann.

Durch die Anordnung der Schnittstelle beim Datenanbieter 3 ergibt sich der Vorteil, daß nicht für jedes Endgerät 1, 2 ein eigener Datendienst erstellt werden muß, der an die Möglichkeiten des Endgerätes angepaßt ist. Vielmehr verhält es sich so, daß ein Datendienst für völlig unterschiedliche Endgeräte nutzbar ist, die sich hinsichtlich ihrer Möglichkeit zur Datenverarbeitung stark unterscheiden können. Es wird so der Aufwand zur Erstellung von Datendiensten verringert. Weiterhin ist es so möglich, die Endgeräte entsprechend einfacher auszugestalten, da nicht die Endgeräte an einen bereits bestehenden Datendienst angepaßt werden, sondern umgekehrt die Datendienste an die Möglichkeiten der Endgeräte angepaßt werden. Dies hat weiterhin den Vorteil, daß wenn zusätzliche Endgeräte mit neuen Möglichkeiten der Datenverarbeitung eingeführt werden, die bereits bestehenden Datendienste einfach an diese neuen Endgeräte anpaßbar sind. Wenn neue Typen von Endgeräten erscheinen, so müssen nur die Schnittstellen an die neuen Endgeräte angepaßt werden.

Die Schnittstellen 6, 7 müssen nicht zwingend zusammen mit dem Datendienst 4 angeordnet sein. Es ist ebensogut denkbar, daß Anbieter des Kommunikationsmediums 10, beispielsweise Betreiber von digitalen Mobiltelefonnetzen, entsprechend Daten bei Diensteanbietern einkaufen und dann für ihre Mobiltelefonkunden aufbereiten. In diesem Fall bestände somit der in der Figur 2 dargestellte Datenanbieter aus zwei unterschiedlichen Anbietern, die sich jedoch aus der Sicht des Kunden als ein einheitlicher Datenanbieter 3 präsentieren bestehen.

Durch die Verlagerung eines Teil der Funktionen aus dem Endgerät heraus zum Datenanbieter 3 wird ermöglicht, daß verschiedene Endgeräte den gleichen Dienst nutzen. Weiterhin werden so die Endgeräte vereinfacht, da der notwendige Mehraufwand zur Anpassung unterschiedlicher Endgeräte an den Datendienst nur einmal bei den Dienstanbietern anfallen. Weiterhin ist es so sehr einfach möglich, bereits vorhandene Dienste durch zusätzliche Funktionen zu erweitern. Es müßten nur entsprechend die Schnittstellen angepaßt werden. Für Endgeräte mit neuen Darstellungsmöglichkeiten müssen nur entsprechende Schnittstellen bei den Datenanbietern hinterlegt werden. Die bereits vorhandenen Dienste können dabei dann ebenfalls genutzt werden. Sofern Fehler auftreten, können diese sehr einfach zentral bei den Dienstanbietern 3 behoben werden, ohne daß dabei die Software in allen Endgeräten ausgetauscht werden muß. Prinzipiell ist es daher generell vorteilhaft, wenn sich die Datenanbieter an die Endgeräte anpassen und nicht umgekehrt.

Eine Möglichkeit der Übermittlung der Möglichkeiten zur Datenverarbeitung des Endgeräts besteht darin, daß in den Endgeräten nur eine Endgerätekennung oder ein Endgerätecode gespeichert ist, der dann an die Diensteanbieter übermittelt wird. In den Schnittstellen oder den Diensteanbietern ist eine Liste gespeichert, die es dann erlaubt die Kennung bestimmten Möglichkeiten zur Datenverarbeitung zuzuordnen.

## Patentansprüche

1. Verfahren zur Übertragung von Informationen zwischen einer Infrastruktur (3)und Datenabnehmern (1, 2), insbesondere einem Dienstanbieter (3) und Endgeräten (1, 2) in einem Kraftfahrzeug, wobei die Datenabnehmer (1, 2) bestimmte Möglichkeiten zur Datenverarbeitung aufweisen, wobei die Infrastruktur (3) einen Datendienst (4) in einem standardisierten Format zur Verfügung stellt, **dadurch gekennzeichnet, daß** in der Infrastruktur (3) Schnittstellen (6, 7) vorgesehen sind, durch die die Daten im standardisierten Format an die jeweiligen Möglichkeiten der Datenverarbeitung der Datenabnehmer (1, 2) angepaßt werden.

2. Verfahren nach Anspruch 1, **dadurch gekennzeichnet, daß** die Übertragung zwischen der Infrastruktur (3) und den Datenabnehmern (1, 2) mittels eines Funknetzes, insbesondere eines digitalen Mobilfunknetzes erfolgt.

3. Verfahren nach einem der vorhergehenden Ansprüche, **dadurch gekennzeichnet, daß** die Datenabnehmer (1, 2) zur Infrastruktur (3) Anforderungsdaten senden, und daß aufgrund der Anforderungsdaten sowohl ein Datendienst (4) wie auch eine zugehörige Schnittstelle (6, 7) ausgewählt wird.

4. Endgerät (1, 2) zum Empfang von Daten von einer Infrastruktur (3), wobei das Endgerät (1, 2) Mittel zur Sendung eines Anforderungssignal an die Infrastruktur (3) aufweist, durch das Daten von der Infrastruktur (3) abgerufen werden, wobei das Endgerät (1, 2) bestimmte Möglichkeiten zur Verarbeitung der Daten aufweist, wobei die Infrastruktur (3) einen Datendienst (4) in einem standardisierten Format zur Verfügung stellt, **dadurch gekennzeichnet, daß** in der Infrastruktur (3) Schnittstellen (6, 7) vorgesehen sind, durch die die Daten im standardisierten Format an die jeweiligen Möglichkeiten der Datenverarbeitung der Datenabnehmer (1, 2) angepaßt werden, und daß das Endgerät (1, 2) Mittel zur Sendung eines Anforderungssignal aufweist, mit dem eine Information über die Möglichkeiten der Datenverarbeitung durch das Endgerät (1, 2) an die Infrastruktur (3) übermittelt wird.

5. Endgerät nach Anspruch 4, **dadurch gekennzeichnet, daß** das Endgerät durch ein Funknetz, insbesondere durch ein digitales Mobiltelefonfunknetz Daten mit einem Datenanbieter (3) austauschen kann.

6. Endgerät nach Anspruch 4 oder 5, **dadurch gekennzeichnet, daß** das Endgerät als Autoradio mit Zusatzfunktionen ausgebildet ist.

7. Endgerät nach Anspruch 4 bis 6, **dadurch gekennzeichnet, daß** die Information über die Möglichkeiten zur Datenverarbeitung des Endgeräts (1, 2) aus einer Endgerätekennung besteht.

## Claims

1. Method for transmitting information between an infrastructure (3) and data recipients (1, 2), in particular a service provider (3) and terminals (1, 2) in a motor vehicle, the data recipients (1, 2) having specific data processing possibilities, the infrastructure (3) making available a data service (4) in a standardized format, **characterized in that**, in the infrastructure (3), interfaces (6, 7) are provided by means of which the data in the standardized format is adapted to the respective data processing possibilities of the data recipients (1, 2).

2. Method according to Claim 1, **characterized in that** the transmission between the infrastructure (3) and the data recipients (1, 2) is carried out by means of a radio network, in particular a digital mobile phone network.

3. Method according to one of the preceding claims, **characterized in that** the data recipients (1, 2) transmit request data to the infrastructure (3), and **in that** both the data service (4) and an associated interface (6, 7) are selected on the basis of the request data.

4. Terminal (1, 2) for receiving data from an infrastructure (3), the terminal (1, 2) having means for transmitting a request signal to the infrastructure (3) by means of which data is called from the infrastructure (3), the terminal (1, 2) having specific possibilities for processing the data, the infrastructure (3) making available a data service (4) in a standardized format, **characterized in that** in the infrastructure (3), interfaces (6, 7) are provided by means of which the data in the standardized format is adapted to the respective data processing possibilities of the data recipients (1, 2), and **in that** the terminal (1, 2) has means for transmitting a request signal with which information about the data processing possibilities by means of the terminal (1, 2) is transmitted to the infrastructure (3).

5. Terminal according to Claim 4, **characterized in that** the terminal can exchange data with a data provider (3) by means of a radio network, in particular by means of a digital mobile phone network.

6. Terminal according to Claim 4 or 5, **characterized in that** the terminal is embodied as a car radio with supplementary functions.

7. Terminal according to Claims 4 to 6, **characterized in that** the information about the data processing possibilities of the terminal (1, 2) is composed of a terminal identifier.

## Revendications

1. Procédé de transmission d'informations entre une infrastructure (3) et un destinataire de données (1, 2), notamment un prestataire de service (3) et des terminaux (1, 2) dans un véhicule automobile, selon lequel
les destinataires de données (1, 2) ont certaines possibilités de traitement de données,
l'infrastructure (3) fournit un service de données (4) sous un format standardisé,
**caractérisé en ce que**
l'infrastructure (3) comporte des interfaces (6, 7) adaptant les données du format standardisé aux possibilités respectives de traitement de données des destinataires de données (1, 2).

2. Procédé selon la revendication 1,
**caractérisé en ce que**
la transmission entre l'infrastructure (3) et les destinataires de données (1, 2) se fait à l'aide d'un réseau radio, notamment d'un réseau de téléphonie mobile numérique.

3. Procédé selon l'une des revendications précédentes,
**caractérisé en ce que**
les destinataires de données (1, 2) envoient des données de requête à l'infrastructure (3) et
à partir des données de requête on sélectionne à la fois un service de données (4) et une interface correspondante (6, 7).

4. Terminal (1, 2) pour la réception de données à partir d'une infrastructure (3), comportant des moyens pour émettre un signal de requête à destination de l'infrastructure (3) par lequel il appelle des données de l'infrastructure (3),
le terminal (1, 2) ayant certaines possibilités de traitement des données, l'infrastructure (3) fournissant un service de données (4) selon un format standardisé,
**caractérisé en ce que**
l'infrastructure (3) comporte des interfaces (6, 7) par lesquelles les données au format standardisé sont adaptées aux possibilités respectives de traitement de données des destinataires de données (1, 2) et
le terminal (1, 2) comporte des moyens pour envoyer un signal de requête par lequel il transmet à l'infrastructure (3) une information relative aux possibilités de traitement des données par le terminal (1, 2).

5. Terminal selon la revendication 4,
**caractérisé en ce qu'**
il peut échanger des données avec un prestataire de données (3) par un réseau radio, notamment un réseau numérique de téléphone mobile.

6. Terminal selon la revendication 4 ou 5,
**caractérisé en ce qu'**
il est réalisé sous la forme d'un autoradio avec des fonctions complémentaires.

7. Terminal selon les revendications 4 à 6,
**caractérisé en ce que**
l'information concernant les possibilités de traitement de données du terminal (1, 2) se compose d'une caractéristique du terminal.
